# EUROPÄISCHE PATENTSCHRIFT

(11) **EP 0 243 778 B1**
(45) Veröffentlichungstag und Bekanntmachung des Hinweises auf die Patenterteilung: **13.01.1993**
(21) Anmeldenummer: 87105466.4
(22) Anmeldetag: 13.04.1987
(51) Int. Cl.: B01D 53/34, F23J 15/00

(54) **Verfahren und Vorrichtung zum Reinigen von Abgasen**
Process and apparatus for purifying waste gases
Procédé et dispositif pour purifier des gaz de queue

(30) Priorität: 28.04.1986 DE 3614385
(43) Veröffentlichungstag der Anmeldung: 04.11.1987
(73) Patentinhaber: Qualmann, Horst, 21423 Winsen (DE); Walter, Wolfgang, D-21271 Dierkshausen (DE)
(72) Erfinder: Qualmann, Horst, 21423 Winsen (DE); Walter, Wolfgang, D-21271 Dierkshausen (DE)
(74) Vertreter: Schöning, Hans-Werner, Dipl.-Ing.

(56) Entgegenhaltungen:
- DE-A- 3 205 101
- DE-A- 3 217 782
- DE-A- 3 334 408
- DE-A- 3 444 665
- DE-A- 3 521 725
- DE-A- 3 531 735
- DE-B- 1 271 296

## Beschreibung

Die Erfindung betrifft ein Verfahren zum Reinigen von beim Verbrennungsvorgang entstehenden Abgasen von Feuerungsanlagen, bei dem die den Feuerungsbereich verlassenden hocherhitzten Abgase über Kühlmittel soweit abgekühlt werden, daß der Taupunkt der Abgase unterschritten wird und infolgedessen der Wasseranteil dieser Abgase unter gleichzeitiger Bindung des Schadstoffanteils ausfällt, wobei die schadstoffverminderten Abgase zur Nachreinigung nachfolgend mit Wasser besprüht werden und schließlich erwärmt an die Umgebung abgegeben werden, sowie eine Vorrichtung zur Ausführung dieses Verfahrens.

Ein Verfahren und eine Vorrichtung dieser Art sind bekannt (DE-B-12 71 296). Nach diesem bekannten Verfahren werden vorgereinigte Feuerungsabgase in Wärmetauschern abgekühlt und in ein- oder mehrstufigen Berieselungskammern mit zerstäubtem Wasser behandelt, wobei die kalten Abgase durch die vor dem Auswaschen entzogene Wärme wieder aufgeheizt werden. Mit dem bekannten Verfahren und der bekannten Vorrichtung soll der bis dahin beobachtete Nachteil behoben werden, daß die Absorption von Schwefeldioxid in Feuerungsabgasen außerordentlich langsam vorgeht und die bis dahin bekannten Berieselungsanlagen nicht ausreichten, um das Schwefeldioxid restlos abscheiden zu können. Es wurde deshalb vorgeschlagen, die Kühltemperaturen für die Feuerungsabgase derart einstellbar vorzusehen, daß eine ausreichende Absorption von Schwefeldioxid mit möglichst geringen Wassermengen erzielt werden kann. Dieses wurde dadurch zu erreichen zu versucht, daß in zwei gezielten Schritten die Abgase extrem abgekühlt wurden, um die Wasserlöslichkeit von Schwefeldioxid durch Erniedrigung der Waschwassertemperaturen sehr stark zu erhöhen. Zu diesem Zwecke wurde, sowohl für die Temperaturerniedrigung eines ersten Wärmetauschers als auch für eine diesem Wärmetauscher nachgeschaltete Berieselungskammer, Waschwasser zugeführt, das einer Fremdwasserquelle entzogen wurde.

Nachteilig bei dem bekannten Verfahren und der bekannten Vorrichtung ist, daß als Kühlmittel unbegrenzt von einer Fremdwasserquelle zur Verfügung stehendes Waschwasser einem Wärmetauscher zugeführt wird, über den die Abgase abgekühlt werden. Weiterhin ist es nachteilig, daß das mit Schadstoffen angereicherte Abwasser, das dort naturgemäß in großen Mengen anfällt, keiner weiteren Verwendung zugeführt wird, vielmehr als verdünnte Schwefelsäure den Verfahrensprozeß verläßt und einer gesonderten Entsorgung zugeführt werden muß oder in unentsorgtem Zustand an die Umgebung abgegeben wird. Unter heutigen Umweltverträglichkeitskriterien ist ein solcher Umgang mit hochverschmutztem Wasser, gerade in bezug auf die ständig steigende Übersäuerung der Gewässer, völlig undenkbar und unzulässig.

Es ist Aufgabe der vorliegenden Erfindung, ein Verfahren und eine Vorrichtung zu schaffen, mit dem auch bestehende Feuerungsanlagen betrieben und nachgerüstet werden können, daß das Verfahren einfach und kostengünstig durchführbar ist und die Vorrichtung leicht einbaubar ist und sie weitgehend fremdenergiefrei betrieben werden können, um den Schadstoffanteil der Abgase drastisch reduzieren zu können, wobei wie in großindustriellen Abgasanlagen die Schadstoffe und die schadstoffbelasteten Kühlmittel nicht an die Umgebung abgegeben werden, sondern in einem Kreisprozeß beim Verfahren bzw. in der Vorrichtung weiter über eine nahezu unbeschränkte Zahl von Betriebszyklen verwendet werden können.

Gelöst wird die Aufgabe gemäß dem erfindungsgemäßen Verfahren dadurch, daß die Nachreinigung der Abgase im Gegenstrom erfolgt und diese vor Abgabe an die Umgebung die hocherhitzten Abgase vorkühlen und dabei durch den Wärmeaustausch erwärmt werden, und daß das ausgefallene, aufgefangene Wasser in einem Mehrkammerprozeß vom Schadstoffanteil mittels eines Reaktionsmittels befreit wird und wenigstens teilweise als Sprühwasser im Nachreinigungsvorgang verwendet wird.

Ein wesentlicher Vorteil des erfindungsgemäßen Verfahrens besteht darin, daß die abgekühlten, gereinigten Abgase als Kühlmittel selbst die hocherhitzten Abgase von der Feuerungsanlage im Sinne einer Vorkühlung abkühlen. Der Wärmeaustausch im Wärmetauscher erfolgte somit vorteilhafterweise nahezu völlig fremdenergiefrei, im Gegensatz zum fremdenergiebetriebenen, nämlich mit gesondert zugeführtem Kühlwasser betriebenen bekannten Wärmetauscher.

Auch ist es von Vorteil, daß das ausgefallene, aufgefangene Wasser, nach der Befreiung vom Schadstoffanteil wenigstens teilweise als Sprühwasser im Nachreinigungsvorgang verwendet wird, so daß kostspieliges Reinigungswasser nicht bereitgestellt zu werden braucht. Auch wenn das Wasser nach einer vorbestimmten Zahl von Betriebszyklen für den Reinigungsvorgang in vollem Umfang nicht mehr verwendet werden kann, gelangt es nicht automatisch unkontrolliert in die Umgebung bzw. in die Kanalisation, vielmehr kann es, da es durch den Kreisvorgang fortwährend aufgefangen wird, auf kontrollierte Weise gesammelt, abtransportiert und umweltbelastungsfrei entsorgt werden.

Bei einer weiteren Ausgestaltung des Verfahrens wird den Abgasen nach dem Nachreinigungsvorgang Umgebungsluft mengenmäßig beigemischt, so daß die Kühlmitteleigenschaft der gereinigten Abgase zur Kühlung der primären hocherhitzten Abgase noch verbessert wird und darüber hinaus die Schadstoffkonzentration im ausgestoßenen Abgasvolumen vermindert wird. Darüber hinaus ist durch die mengenmäßig geregelte Beimischung der Umgebungsluft eine Steuerung des Durchsatzes der Abgase bei der Ausführung dieses Verfahrens möglich.

Der nicht für den Reinigungsvorgang der Abgase benutzte Anteil des aufgefangenen Wassers wird bei einer weiteren vorteilhaften Ausgestaltung des Verfahrens gesammelt und einer gesonderten Schadstoffentsorgungseinrichtung zugeführt. Grundsätzlich befindet sich auch das Wasser, das aus den Abgasen nach Unterschreitung von deren Taupunkt ausfällt, in einem Kreisprozeß, denn nachdem es ausgefallen und gereinigt worden ist, wird es anschließend für den Nachreinigungsprozeß benutzt und fällt wiederum in ein Reservoir zurück, in das es schon zuvor zum Zeitpunkt des Ausfallens nach dem Kondensationsvorgang gefallen ist.

Zur Lösung der Aufgabe ist die Vorrichtung, mit der das Verfahren ausgeführt werden kann, dadurch gekennzeichnet, daß in einem Kondensator, der abgasstromseitig hinter dem Wärmetauscher angeordnet ist, die Abgase unter deren Taupunkt abgekühlt werden, wobei der Behälter, der durch eine Mehrzahl von jeweils mit einem Reaktionsmittel gefüllten Kammern gebildet wird, unter dem Kondensator angeordnet und mit der Besprüheinrichtung verbunden ist, und daß abgasstromseitig hinter dem Kondensator die Einrichtung zum Besprühen der Abgase mit Wasser im Gegenstrom zu den Abgasen vorgesehen ist, wobei die gereinigten Abgase als Kühlmittel des Wärmetauschers dienen.

Die durch die Vorrichtung erreichten Vorteile sind im wesentlichen die gleichen, die vorangehend im Zusammenhang mit den Vorteilen des Verfahrens aufgeführt worden sind. Zusätzlich ist es bei der Vorrichtung von Vorteil, daß sämtliche Einzelelemente der Vorrichtung in einem einzigen Gehäuse untergebracht sein können und deshalb auf einfache Weise als Zusatzvorrichtung in Reihe mit schon bestehenden Feuerungsanlagen angeordnet werden können. Bei bestehenden Feuerungsanlagen braucht die Vorrichtung nur in die Abgasleitung bzw. in den Abgasströmungsweg zwischen Feuerungsanlage und Schornsteineinrichtung eingesetzt zu werden. Damit ist eine hochwirksame Reinigung der Abgase auch von schon installierten Feuerungsanlagen ohne großen Aufwand möglich.

Vorteilhafterweise ist der Wärmetauscher als sogenannter Kreuzstromwärmetauscher ausgebildet, d.h. durch einen ersten Pfad des Wärmetauschers strömen die von der Feuerungsanlage kommenden hocherhitzten Abgase, während durch den quer zu diesem Pfad verlaufenden zweiten Pfad die gereinigten und abgekühlten Abgase strömen, die dann nachfolgend an die Umgebung abgegeben werden. Beide Pfade des Wärmetauschers werden somit von den gleichen Abgasen durchströmt, jedoch in dem jeweiligen Pfad mit erheblich unterschiedlichem Schadstoffanteil.

Gemäß einer vorteilhaften Ausführungsform ist in vertikaler Richtung unterhalb des Kondensators und unterhalb der Besprüheinrichtung eine Auffangeinrichtung für das Wasserkondensat angeordnet, von der dieses in einen Auffangbehälter gegeben wird. Vorteilhafterweise wird das Wasserkondensat von einer ersten Kammer zu einer letzten Kammer abwechselnd unterhalb und oberhalb der Kammerwände geführt. Mit Hilfe des Reaktionsmittels wird das schadstoffangereicherte Wasserkondensat auf chemischem Wege gereinigt und tritt aus der letzten Kammer in hochgereinigtem Zustand aus und kann der Sprüheinrichtung zugeführt werden, über die die Abgase nochmals einer Nachreinigung unterzogen werden.

Die Auffangeinrichtung ist vorteilhafterweise so gestaltet, daß sie mit ihrem Auslaß in die erste Kammer mündet, so daß sichergestellt ist, daß die gesamte aus den einzelnen mit Reaktionsmittel gefüllten Kammern gebildete Reinigungskette vollständig durchflossen wird, d.h. die vorhandene Reinigungsmöglichkeit voll ausgeschöpft wird.

Der Auffangbehälter ist vorzugsweise über eine mit Ventileinrichtungen versehene Leitung mit der Besprüheinrichtung verbunden, die teilweise oder vollständig fernsteuerbar ausgerüstet sein können, so daß diese Anlagen in Verbindung mit der automatischen Steuerung einer daran angeschlossenen Feuerungsanlage vollständig fernsteuerbar ist, und somit automatisch betrieben werden kann.

Gemäß einer vorteilhaften anderen Ausführungsform ist der Auffangbehälter über eine mit einer Ventileinrichtung versehenen Leitung mit einem Behälter zur Schadstoffentsorgung des Wasserkondensats verbunden, d.h. dann, wenn die Schadstoffkonzentration auch im gereinigten Wasser so groß ist, daß es sinnvoll nicht mehr zu Nachreinigungszwecken eingesetzt werden kann, wird durch entsprechende Betätigung der Ventile das Wasser aus dem Auffangbehälter abgelassen bzw. über eine Pumpe in der Leitung abgepumpt und dann einer gesonderten Schadstoffentsorgung unterworfen.

In den Strömungsweg der gereinigten Abgase zwischen der Besprüheinrichtung und dem Wärmetausch ist vorteilhafterweise über eine Ventileinrichtung Umgebungsluft zuführbar, wobei durch diese Ventileinrichtung einerseits der Durchsatz der zu reinigenden Abgase durch die Vorrichtung einstellbar ist und zum anderen, daß dadurch der Schadstoffkonzentrationsgrad pro aus der Vorrichtung austretendem Abgasvolumen einstellbar ist, so daß auf diese Weise auch schon eine Vorvermischung mit der Umgebungsluft stattfinden kann.

Schließlich ist es von Vorteil, daß im Abgasströmungsweg der gereinigten Abgase, nachdem diese den Wärmetauscher als Kühlmittel für die hocherhitzten Abgase passiert haben, eine Ventilatoreinrichtung zur Förderung der Abgase in die Umgebungsluft angeordnet ist. Eine derartige Ausgestaltung der Vorrichtung kann dann notwendig sein, wenn beispielsweise lange Abgasschächte verbunden werden müssen. Auch kann diese Ventilatoreinrichtung vorzugsweise dafür dienen, den Durchsatz der zu reinigenden Abgase durch die Vorrichtung hindurch derart einzustellen, daß die Reinigung der Abgase tatsächlich bei einer dafür optimierten Durchsatzmenge erfolgt.

Aus der DE-A-35 21 725 ist ein Wärmetauscher bekannt, mit dem, anders als bei dem Verfahren und der Vorrichtung, nicht die Entfernung von Schadstoffen aus den Abgasen bezweckt wird, sondern eine Neutralisierung der Schadstoffe der Abgase. Nach dem bekannten vorveröffentlichten Dokument soll von solchen Neutralisierungsanlagen bzw. -verfahren ausgegangen werden, wobei die Neutralisierung der Abgase, beispielsweise durch Einsprühen von Natronlauge oder dergleichen, noch verbessert werden soll.

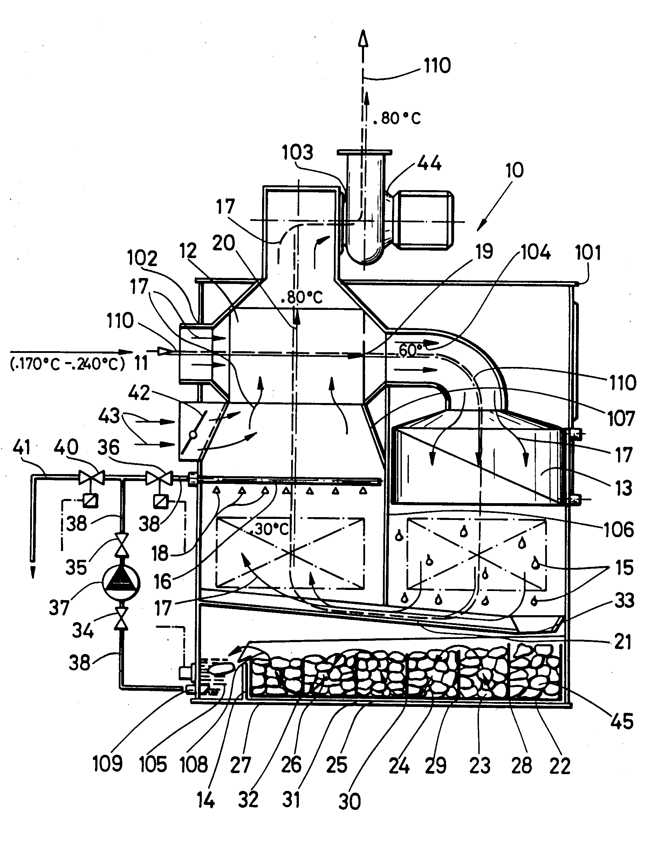

Die Erfindung wird nun unter Bezugnahme auf die nachfolgende schematische einzige Zeichnung anhand eines Ausführungsbeispiels eingehend beschrieben.

Die einzige Figur zeigt in geschnittener Darstellung eine Vorrichtung, die in die Abgasleitung einer Feuerungsanlage eingefügt ist.

Die Vorrichtung 10 wird im wesentlichen aus einem Gehäuse 101 mit beliebiger geeigneter Form gebildet, das einen Abgaseinlaß 102 und einen Abgasauslaß 103 aufweist. In den Abgaseinlaß 102 wird der hocherhitzte Abgasstrom 11, der von der hier nicht dargestellten Feuerungsanlage kommt, in die Vorrichtung 10 eingeführt. Aus dem Abgasauslaß 103 geht das gereinigte Abgas 17, gegebenenfalls über hier nicht gesondert dargestellte Abgasleitungen, in einen Schornstein oder unmittelbar in die Umgebung.

Der in der Vorrichtung 10 vom Abgaseinlaß 102 zum Abgasauslaß 103 verlaufende Abgasströmungsweg ist in der Figur durch eine gestrichelte Linie symbolisch dargestellt. Bei der nachfolgenden Darstellung der einzelnen Vorrichtungskomponenten wird in bezug auf ihre relative Anordnung zueinander im Bezug auf den gestrichelt dargestellten Abgasströmungsweg 110 genommen.

Dem Abgaseinlaß 102 in der Vorrichtung 10 im Abgasströmungsweg 110 nachfolgend ist ein Wärmetauscher 12 angeordnet, der im einzelnen weiter unten eingehend beschrieben wird. Dem Wärmetauscher 12 nachfolgend ist ein Kondensator 13 angeordnet, wobei der Wärmetauscher 12 und der Kondensator 13 über eine geeignete Rohrverbindung 104 verbunden sind. Der Kondensator 13 kann grundsätzlich auf beliebige geeignete Weise ausgebildet sein und dient dem Zweck, das im Wärmetauscher 12 schon vorgekühlte Abgas 17, derart abzukühlen, daß der Taupunkt der Abgase 17 unterschritten wird.

Unterhalb des Kondensators 13 ist im Vorrichtungsgehäuse 101 ein Auffangbehälter 14 zum Auffangen des Wasserkondensats 15 angeordnet, das aus dem Abgas 17 im Kondensator 13 ausfällt. Der Auffangbehälter 14 besteht aus einer Mehrzahl von Kammern 22, 23, 24, 25, 26, 27, die durch entsprechende Kammertrennwände 28, 29, 30, 31, 32 voneinander getrennt sind. Die Kammertrennwände 28 bis 32 sind derart ausgebildet, daß sie abwechselnd von der ersten Kammer 22 bis zur letzten Kammer 27 unten geschlossen und unten geöffnet sind. Die Kammern 22 bis 27 sind mit einem Reaktionsmittel gefüllt, wobei die chemische Reaktion, mittels der die Reinigung des schadstoffangereicherten Wasserkondensats 15 vonstatten geht, weiter unten genauer beschrieben wird. Das aus dem Auffangbehälter 14 austretende schadstoffbefreite Wasser mündet in einen Behälterteil 105 im Bodenbereich der Vorrichtung 10.

Dem Vorrichtungsbereich, in dem das Wasserkondensat 15 aus dem Kondensator 13 ausfällt,benachbart, aber durch eine Wand 106 bis in den Bereich einer Auffangeinrichtung 21 hinein durch eine Wand 106 getrennt, befindet sich im Abgasströmungsweg 110 dem Kondensator 13 nachfolgend eine Zone, in der eine Besprüheinrichtung 16 quer zum Abgasströmungsweg 110 der Abgase 17 angeordnet ist. Der Besprüheinrichtung 16 im Abgasströmungsweg 110 nachfolgend durchquert das Abgas 17 durch eine geeignet ausgebildete Rohrverbindung 107 geleitet, nachfolgend den Wärmetauscher 12.

Nachdem das Abgas 17 den Wärmetauscher 12 verlassen hat, wird es durch eine dem Wärmetauscher 12 im Abgasströmungsweg 110 nachfolgend angeordnete Ventilatoreinrichtung 44 an die Umgebung abgegeben, d.h. entweder über einen hier nicht dargestellten Schornstein oder ähnliche Einrichtungen, oder unmittelbar direkt an die Umgebung.

Im wesentlichen in vertikaler Richtung unterhalb der Besprüheinrichtung 16 und im wesentlichen in vertikaler Richtung unterhalb des Kondensators 13 ist eine Auffangeinrichtung 21 angeordnet, die einmal das aus dem Kondensator 13 ausfallende Wasserkondensat und zum anderen das aus der Besprüheinrichtung 16 austretende Wasser 18 auffängt und zu einem Auslaß 33 der Auffangeinrichtung leitet. Die Auffangeinrichtung 21 ist gegenüber der Horizontalen leicht geneigt, so daß das Wasser 18 bzw. das aus dem Kondensator 13 austretende Wasserkondensat selbstätig zum Auslaß 33 fließt, wobei der Auslaß unmittelbar über der ersten Kammer 22 des Auffangbehälters 14 angeordnet ist.

Wie vorangehend schon dargestellt, sind die einzelnen Kammern miteinem Reaktionsmittel gefüllt, so daß das in die Kammer 22 einfließende stark schadstoffangereicherte Wasser nach Durchfließen der Kammern schadstofffrei in das Behälterteil 105 einfließt, was symbolisch durch den Pfeil 108 dargestellt ist. Am unteren Ende des Behälterteils 105 ist ein Auslaßstutzen 109 angebracht, der mit einer Leitung 38 verbunden ist. Die Leitung 38 führt über ein in Reihe nachfolgend geschaltetes Ventil 34, eine Pumpe 37 , ein Ventil 35 sowie ein weiteres Ventil 36 zu der Besprüheinrichtung 16, die, wie schon dargestellt, im wesentlichen unterhalb des Wärmetauschers 12 angeordnet ist.

Darüber hinaus ist die Leitung 38 zwischen Ventil 35 und Ventil 36 in Form eines T-Stücks mit einem weiteren Ventil 40 verbunden, das auslaßseitig über eine Leitung 41 mit einem hier nicht dargestellten Behälter verbunden ist, und in den das im Behälterteil 105 sich ansammelnde Wasser dann gepumpt wird, wenn der Schadstoffanreicherungsgrad trotz Säuberung so groß geworden ist, daß es zum Zwecke der Nachreinigung in der Besprüheinrichtung 16 nicht mehr verwendet werden kann. Das in dem nicht dargestellten Behälter befindliche mit Schadstoffen angereicherte Wasser kann dann mittels einer dazugehörigen Schadstoffentsorgungseinrichtung gereinigt werden, und zwar in einem den gesetzlichen Bestimmungen entsprechenden Grad. Nachfolgend kann es dann in die Kanalisation eingelassen werden.

Die Ventile 34, 35 , 36, 40 können ebenso wie die Pumpe 37 fernsteuerbar ausgebildet sein, so daß der Strömungsweg des Wassers 18 innerhalb der Rohre 38, 41 vollkommen automatisch gesteuert werden kann.

Die im Rohrverbinder 107 oberhalb der Besprüheinrichtung 16 angeordnete Ventileinrichtung 42, die die Zufuhr von Umgebungsluft 43 in den Rohrverbinder 107 hinein zur Vermischung mit dem Abgas 17 steuert, kann ebenfalls automatisch betätigt bzw. reguliert werden.

Bei der Ausführung des Verfahrens gelangt der von einer hier nicht dargestellten Feuerungsanlage kommende Abgasstrom 11 über den Abgaseinlaß 102 in die Vorrichtung 10. Der Abgasstrom 11 weist dabei eine Temperatur von plus 170 ° C bis plus 240 ° C auf. Dem Abgasströmungsweg 110 nachfolgend gelangt das durch die Pfeile 17 dargestellte Abgas in einen ersten Pfad 19 des als Kreuzstromwärmetauschers ausgebildeten Wärmetauscher 12 und wird durch das Abgas 17 das um zum ersten Pfad 19 querverlaufenden zweiten Pfad 20 strömt, auf ca. 60 ° C abgekühlt. Nachfolgend gelangt das auf 60 ° C abgekühlte Abgas 17 in den Kondensator 13, in dem es derart abgekühlt wird, daß der Taupunkt des Abgases 17 unterschritten wird und demzufolge das im Abgas 17 unter Bindung der Schadstoffe des Abgases in Form von Wasserkondensat 15 ausfällt und auf die Auffangeinrichtung 21 tropft. Das Abgas 17 gelangt dann, nachdem es unterhalb der Trennwand, die zwischen Kondensator 13 und der Besprüheinrichtung 16 angeordnet ist, längsgeströmt ist, in den Bereich unterhalb der Besprüheinrichtung 16, wo es in einem Nachreinigungsvorgang mit Wasser 18 besprüht wird, wobei das herabströmende Wasser 18 ebenfalls in der Auffangeinrichtung 21 gesammelt wird und zusammen mit dem Wasserkondensat 15, wie vorangehend beschrieben, in die erste Kammer 22 des Auffangbehälters 14 fließt. Das die Besprüheinrichtung 16 im wesentlichen in vertikaler Richtung nach oben verlassende Abgas 17 weist dann eine Temperatur von ca. 30 ° C auf.

Nachfolgend durchströmt das Abgas 17 den Rohrverbinder 107 und wird dort gegebenenfalls über die Ventileinrichtung 42 mit Umgebungsluft 43 angereichert bzw. vermischt. Nachfolgend durchströmt das Abgas 17 den vertikal verlaufenden zweiten Pfad 20 des Wärmetauschers 12 und entzieht dabei dem im ersten Pfad 19 strömenden hocherhitzten und verunreinigten, von der Feuerungsanlage kommenden Abgas 17, wie vorangehend beschreiben, Wärme. Dabei erwärmt sich das gereinigte, aus dem zweiten Pfad 20 des Wärmetauschers 12 austretende Abgas 17 wiederum auf ca. 80 ° c und wird über den Auslaß 103 der Vorrichtung 10 entweder über die Ventilatoreinrichtung in die Umgebung abgegeben oder, soweit der Eigenzug auf das Abgas 17 innerhalb der Vorrichtung 10 ausreichend ist, direkt an die Umgebung abgegeben. Das aus dem Auffangbehälter 14 entsprechend dem Pfeil 108 in den Behälterteil 105 austretende Wasser wird durch das Reaktionsmittel einer vollständigen Reinigung unterzogen, d.h. die Schwefel- und Stickoxydanteile des Abgases 11 der Feuerungsanlage werden in einem solchen Maße gebunden, daß ein Reinigungsgrad der Abgase, nachdem diese die Vorrichtung 10 verlassen, von mehr als 80 % erreicht wird.

Als Reaktionsmittel 45 kann grundsätzlich jedes geeignetes Mittel verwendet werden. So eignet sich dafür insbesondere Calciumcarbonat (Kalkstein, Marmor) in Granulatform, da dieses kostengünstig bereitstellbar ist und sowohl den Schweloxydanteil SO₂, SO₃ als auch den Stickoxydanteil NO, NO₂ neutralisieren kann. Die Reaktion eines derartigen Reaktionsmittels 45 läuft beispielsweise folgendermaßen ab.

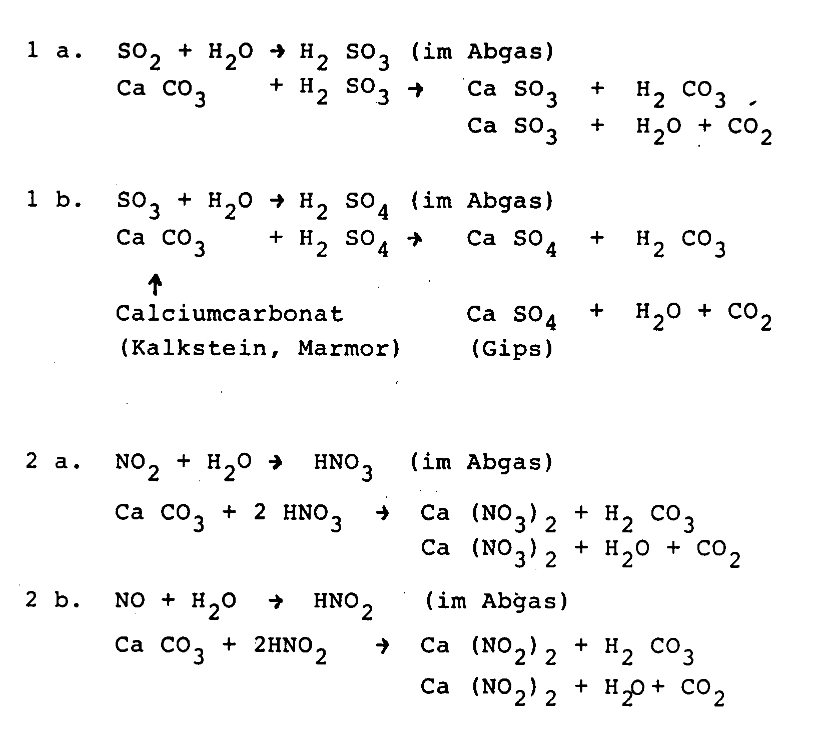

Grundsätzlich eignet sich als Reaktionsmittel 45 auch Mg CO₃ (Magnesiumcarbonat) und Mg (OH)₂ (Magnesiumhydroxyd).

### Bezugszeichenliste

- 10: Vorrichtung
- 101: Gehäuse
- 102: Abgaseinlaß
- 103: Abgasauslaß
- 104: Rohrverbindung
- 105: Behälterteil g
- 106: Wand
- 107: Rohrverbindung
- 108: Pfeil
- 109: Auslaßstutzen
- 110: Abgasströmungsweg
- 11: Abgasstrom
- 12: Wärmetauscher
- 13: Kondensator
- 14: Auffangbehälter
- 15: Wasserkondensat
- 16: Besprüheinrichtung
- 17: Abgas
- 18: Wasser
- 19: erster Pfad
- 20: zweiter Pfad
- 21: Auffangeinrichtung
- 22: Kammer
- 23: Kammer
- 24: Kammer
- 25: Kammer
- 26: Kammer
- 27: Kammer
- 28: Kammer
- 29: Kammertrennwand
- 30: Kammertrennwand
- 31: Kammertrennwand
- 32: Kammertrennwand
- 33: Auslaß
- 34: Ventil
- 35: Ventil
- 36: Ventil
- 37: Pumpe
- 38: Leitung
- 40: Ventil
- 41: Leitung
- 42: Ventileinrichtung
- 43: Umgebungsluft
- 44: Ventilatoreinrichtung
- 45: Reaktionsmittel

## Patentansprüche

1. Verfahren zum Reinigen von beim Verbrennungsvorgang entstehenden Abgasen von Feuerungsanlagen, bei dem die den Feuerungsbereich verlassenden hocherhitzten Abgase über Kühlmittel soweit abgekühlt werden, daß der Taupunkt der Abgase unterschritten wird und infolgedessen der Wasseranteil dieser Abgase unter gleichzeitiger Bindung des Schadstoffanteils ausfällt, wobei die schadstoffverminderten Abgase zur Nachreinigung nachfolgend mit Wasser besprüht werden und schließlich erwärmt an die Umgebung abgegeben werden, dadurch gekennzeichnet, daß die Nachreinigung der Abgase im Gegenstrom erfolgt und diese vor Abgabe an die Umgebung die hocherhitzen Abgase vorkühlen und dabei durch den Wärmeaustausch erwärmt werden und daß das ausgefallene, aufgefangene Wasser in einem Mehrkammerprozeß vom Schadstoffanteil mittels eines Reaktionsmittels befreit wird und wenigstens teilweise als Sprühwasser im Nachreinigungsvorgang verwendet wird.

2. Verfahren nach Anspruch 1, dadurch gekennzeichnet, daß den Abgasen nach dem Nachreinigungsvorgang Umgebungsluft mengenmäßig beigemischt wird.

3. Verfahren nach einem oder beiden der Ansprüche 1 oder 2 , dadurch gekennzeichnet, daß der nicht für den Nachreinigungsprozeß benutzte Anteil des aufgefangenen Wassers gesammelt und einer gesonderten Schadstoffentsorgungseinrichtung zugeführt wird.

4. Vorrichtung zum Reinigen von beim Verbrennungsvorgang entstehenden Abgasen (11) von Feuerungsanlagen mit einem im Abgasstrom der Feuerungsanlage liegenden Wärmetauscher (12) zur Kühlung der Abgase (11), einem Behälter (14) zum Auffangen von Schadstoffe der Abgase bindenden Wasserkondensats (15) und einer Einrichtung (16) zum nachträglichen Besprühen der schadstoffverminderten Abgase (17) mit Wasser (18), zur Ausführung des Verfahrens nach einem oder mehreren der Ansprüche 1 bis 3, gekennzeichnet durch, einen Kondensator (13), der abgasstromseitig hinter dem Wärmetauscher (12) angeordnet ist, in dem die Abgase unter deren Taupunkt abgekühlt werden, wobei der Behälter (14), der durch eine Mehrzahl von jeweils mit einem Reaktionsmittel gefüllten Kammern (22-27) gebildet wird, unter dem Kondensator angeordnet und mit der Besprüheinrichtung (16) verbunden ist, und daß abgasstromseitig hinter dem Kondensator (13) die Einrichtung (16) zum Besprühen der Abgase (17) mit Wasser (18) im Gegenstrom zu den Abgasen (17) vorgesehen ist, wobei die gereinigten Abgase (17) als Kühlmittel des Wärmetauschers (12) dienen.

5. Vorrichtung nach Anspruch 4, dadurch gekennzeichnet, daß der Wärmetauscher (12) als Kreuzstromwärmetauscher ausgebildet ist, wobei durch einen ersten Pfad (19) des Wärmetauschers (12) die hocherhitzten Abgase (17) der Feuerungsanlage strömen, während durch den quer zu diesem Pfad (19) verlaufenden zweiten Pfad (20) die gereinigten und abgekühlten Abgase (17) strömen.

6. Vorrichtung nach einem oder beiden der Ansprüche 4 oder 5, dadurch gekennzeichnet, daß in vertikaler Richtung unterhalb des Kondensators (13) und unterhalb der Sprüheinrichtung (16) eine Auffangeinrichtung (21) für das Wasserkondensat (15) angeordnet ist, von der dieses in einen Auffangbehälter (14) gegeben wird.

7. Vorrichtung nach einem oder mehreren der Ansprüche 4 bis 6, dadurch gekennzeichnet, daß das Wasserkondensat (15) im Auffangbehälter (14) von einer ersten Kammer (22) zu einer letzten Kammer (27) abwechselnd unterhalb und oberhalb der Kammertrennwände (28, 29, 30, 31, 32) führbar ist.

8. Vorrichtung nach Anspruch 7, dadurch gekennzeichnet, daß die Auffangeinrichtung (21) mit ihrem Auslaß (33) in die erste Kammer (22) mündet.

9. Vorrichtung nach einem oder mehreren der Ansprüche 6 bis 8, dadurch gekennzeichnet, daß der Auffangbehälter (14) über eine mit Ventileinrichtungen (34, 35, 36) versehende Leitung (38) mit der Besprüheinrichtung (16) verbunden ist.

10. Vorrichtung nach einem oder mehreren der Ansprüche 6 bis 9, dadurch gekennzeichnet, daß der Auffangbehälter (14) über eine mit einer Ventileinrichtung (40) versehene Leitung (38, 41) mit einem Behälter zur Schadstoffentsorgung des Wasserkondensats (15) verbunden ist.

11. Vorrichtung nach einem oder mehreren der Ansprüche 4 bis 10, dadurch gekennzeichnet, daß in den Abgasströmungsweg (110) der gereinigten Abgase (17) zwischen der Besprüheinrichtung (16) und dem Wärmetauscher (12) über eine Ventileinrichtung (42) Umgebungsluft (43) zuführbar ist.

12. Vorrichtung nach einem oder mehreren der Ansprüche 4 bis 11, dadurch gekennzeichnet, daß im Abgasströmungsweg (110) der gereinigten Abgase, nachdem diese den Wärmetauscher (12) als Kühlmittel für die hocherhitzten Abgase (17) passiert haben, eine Ventilatoreinrichtung (44) zur Förderung der Abgase (17) in die Umgebung angeordnet ist.

## Claims

1. Process for purifying waste gases, arising during the combustion step, from furnace installations, in which the highly heated waste gases leaving the furnace zone are cooled by means of coolants to such an extent that the temperature falls below the dew point of the waste gases and consequently the water content of these waste gases precipitates with simultaneous binding of the pollutant content, the waste gases of reduced pollutant content then being sprayed with water for further purification and finally being discharged in a heated state to the surroundings, characterised in that the further purification of the waste gases takes place in counter-current and, before discharge into the surroundings, these gases precool the highly heated waste gases and are thus heated by the heat exchange, and that the precipitated, collected water is freed of the pollutant content in a multichamber process by means of a reagent and is used at least partially as spraying water in the further purification step.

2. Process according to Claim 1, characterised in that air from the surroundings is admixed at a controlled rate to the waste gases after the further purification step.

3. Process according to one or both of Claims 1 or 2, characterised in that the proportion of the collected water, not used for the further purification process, is combined and taken to a separate pollutant disposal device.

4. Equipment for purifying waste gases (11), arising during the combustion step, from furnace installations, having a heat exchanger (12) located in the waste gas stream from the furnace installation for cooling the waste gases (11), a vessel (14) for receiving water condensate (15) binding pollutants from the waste gases, and a device (16) for subsequent spraying of the waste gases (17) of reduced pollutant content with water (18), for carrying out the process according to one or more of Claims 1 to 3, characterised by a condenser (13) which is located on the side of the waste gas stream downstream of the heat exchanger (12) in which the waste gases are cooled to a temperature below the dew point thereof, the vessel (14), which is formed by a plurality of chambers (22-27) each filled with a reagent, being arranged underneath the condenser and being connected to the spraying device (16), and by the provision of the device (16) for spraying the waste gases (17) with water (18) in countercurrent to the waste gases (17) on the side of the waste gas stream downstream of the condenser (13), the purified waste gases (17) serving as the coolant of the heat exchanger (12).

5. Equipment according to Claim 4, characterised in that the heat exchanger (12) is designed as a crossflow heat exchanger, the highly heated waste gases (17) from the furnace installation flowing through a first path (19) of the heat exchanger (12), while the purified and cooled waste gases (17) flow through the second path (20) running transversely to this path (19).

6. Equipment according to one or both of Claims 4 or 5, characterised in that, in the vertical direction below the condenser (13) and below the spraying device (16), a receiving device (21) for the water condensate (15) is provided, from which receiving device the condensate is passed into a receiving vessel (14).

7. Equipment according to one or more of Claims 1 to 6, characterised in that the water condensate (15) can be moved in the receiving vessel (14) from a first chamber (22) to a last chamber (27) alternately below and above the chamber partitions (28, 29, 30, 31, 32).

8. Equipment according to Claim 7, characterised in that the outlet (33) of the receiving device (21) leads into the first chamber (22).

9. Equipment according to one or more of Claims 6 to 8, characterised in that the receiving vessel (14) is connected via a line (38) provided with valve devices (34, 35, 36) to the spraying device (16).

10. Equipment according to one or more of Claims 6 to 9, characterised in that the receiving vessel (14) is connected via a line (38, 41) provided with a valve device (40) to a vessel for the disposal of pollutants from the water condensate (15).

11. Equipment according to one or more of Claims 4 to 10, characterised in that surrounding air (43) can be fed via a valve device (42) into the waste gas flow path (110) of the purified waste gases (17) between the spraying device (16) and the heat exchanger (12).

12. Equipment according to one or more of Claims 4 to 11, characterised in that a fan device (44) for delivering the waste gases (17) into the surroundings is located in the waste gas flow path (110) of the purified waste gases, after these have passed through the heat exchanger (12) as coolant for the highly heated waste gases (17).

## Revendications

1. Procédé pour épurer des gaz d'échappement, qui apparaissent lors d'une opération de combustion, d'installations de chauffe, selon lequel les gaz d'échappement très chauds, qui quittent la zone du foyer, sont refroidis par des moyens de refroidissement au point que la température des gaz d'échappement tombe au-dessous de leur point de rosée et que, par conséquent, la teneur en eau de ces gaz d'échappement diminue moyennant une fixation simultanée du pourcentage de substances nocives, et selon lequel on projette ensuite de l'eau dans les gaz d'échappement, dont la teneur en substances nocives est réduite, pour réaliser une épuration complémentaire et finalement ces gaz d'échappement sont délivrés à l'environnement en étant chauffés, caractérisé en ce que l'épuration complémentaire des gaz d'échappement s'effectue à contre-courant et que ces gaz d'échappement très chauds subissent un refroidissement préalable avant leur délivrance dans l'environnement et sont chauffés par échange thermique, et que le pourcentage des substances nocives est éliminé de l'eau séparée et collectée, lors d'un processus mis en oeuvre dans plusieurs chambres, à l'aide d'un agent réactionnel, cette eau étant utilisée au moins en partie en tant qu'eau de projection lors du processus d'épuration complémentaire.

2. Procédé selon la revendication 1, caractérisé en ce que de l'air ambiant est mélangé quantitativement aux gaz d'échappement après le processus d'épuration complémentaire.

3. Procédé selon une ou plusieurs des revendications 1 ou 2, caractérisé en ce que la partie de l'eau recueillie, non utilisée pour le processus d'épuration complémentaire, est collectée et envoyée à un dispositif séparé d'élimination des substances nocives.

4. Dispositif pour épurer des gaz d'échappement (11), qui apparaissent lors du processus de combustion, d'installations de chauffe, comportant un échangeur de chaleur (12) situé dans le courant des gaz d'échappement de l'installation de chauffe et servant à refroidir les gaz d'échappement (11), un récipient (14) destiné à collecter l'eau de condensation (15), qui fixe des substances nocives des gaz d'échappement, et un dispositif (16) pour projeter ultérieurement de l'eau (18) dans les gaz d'échappement (17), dont la teneur en substances nocives est réduite, pour la mise en oeuvre du procédé selon l'une ou plusieurs des revendications 1 à 3, caractérisé par un condenseur (13), qui est disposé, dans le courant des gaz d'échappement, en aval de l'échangeur de chaleur (12), et dans lequel les gaz d'échappement sont refroidis au-dessous de leur point de rosée, le récipient (14), qui est formé par une multiplicité de chambres (22-27) respectivement remplies par un agent réactionnel, est disposé au-dessous du condenseur et est raccordé au dispositif de projection (16), et que le dispositif (16) est prévu en aval du condenseur (13) dans le courant des gaz d'échappement, pour projeter de l'eau (18) dans les gaz d'échappement (17), à contre-courant de ces derniers, les gaz d'échappement (17) épurés étant utilisés comme moyens de refroidissement de l'échangeur de chaleur (12).

5. Dispositif selon la revendication 4, caractérisé en ce que l'échangeur de chaleur (12) est réalisé sous la forme d'un échangeur de chaleur à écoulements croisés, les gaz d'échappement très chauds (17) de l'installation de chauffe circulant suivant un premier trajet (19) dans l'échangeur de chaleur (12), tandis que les gaz d'échappement (17) épurés et refroidis circulent dans un second trajet (20) qui s'étend transversalement par rapport à ce trajet (19).

6. Dispositif selon une ou plusieurs des revendications 4 ou 5, caractérisé en ce qu'un dispositif de collecte (21) pour l'eau de condensation (15), à partir duquel cette eau est envoyée à un récipient de collecte (14), est disposé, dans la direction verticale, au-dessous du condenseur (13) et au-dessous du dispositif de projection (16).

7. Dispositif selon une ou plusieurs des revendications 4 à 6, caractérisé en ce que l'eau de condensation (15) située dans le récipient de collecte (14) peut être envoyée depuis une première chambre (22) à une dernière chambre (27) alternativement au-dessous et au-dessus des parois de séparation (28,29,30,31,32) des chambres.

8. Dispositif selon la revendication 7, caractérisé en ce que le dispositif de collecte (21) débouche, par sa sortie (33), dans la première chambre (22).

9. Dispositif selon une ou plusieurs des revendications 6 à 8, caractérisé en ce que le récipient de collecte (14) est raccordé au dispositif de projection (16), par l'intermédiaire d'une canalisation (38) comportant des dispositifs de vannes (34,35,36).

10. Dispositif selon une ou plusieurs des revendications 7 à 9, caractérisé en ce que le récipient de collecte (14) est raccordé à un récipient servant à éliminer les substances nocives de l'eau de condensation (15), par l'intermédiaire d'une canalisation (38,41) équipée d'un dispositif de vanne (40).

11. Dispositif selon une ou plusieurs des revendications 4 à 10, caractérisé en ce que de l'air ambiant (43) peut être envoyé au trajet (110) du courant des gaz d'échappement (17) épurés, entre le dispositif de projection (16) et l'échangeur de chaleur (12), par l'intermédiaire d'un dispositif de vanne (42).

12. Dispositif selon une ou plusieurs des revendications 4 à 11, caractérisé en ce qu'un dispositif à ventilateur (44) servant à entraîner les gaz d'échappement (17) dans l'environnement est disposé dans le trajet (110) du courant des gaz d'échappement épurés, après que ces derniers aient traversé l'échangeur de chaleur (12) constituant les moyens de refroidissement pour les gaz d'échappement très chauds (17).
